Europäisches Patentamt

European Patent Office

Office européen des brevets

(11) Veröffentlichungsnummer: **0 411 250 A1**

## EUROPÄISCHE PATENTANMELDUNG

(21) Anmeldenummer: 90107211.6

(22) Anmeldetag: 14.04.90

(51) Int. Cl.⁵: **G01J 3/28**

(30) Priorität: 02.08.89 DE 3925606

(43) Veröffentlichungstag der Anmeldung:
06.02.91 Patentblatt 91/06

(84) Benannte Vertragsstaaten:
CH FR GB IT LI

(71) Anmelder: **Messerschmitt-Bölkow-Blohm**
**Gesellschaft mit beschränkter Haftung**
**Robert-Koch-Strasse**
**D-8012 Ottobrunn(DE)**

(72) Erfinder: **Posselt, Winfried**
**Ölbergring 9**
**D-8152 Feldkirchen(DE)**
Erfinder: **Kunkel, Bernd**
**Haselnussweg 28**
**D-8011 Kirchheim(DE)**
Erfinder: **Herbig, Henning**
**Lindenstrasse 8**
**D-8150 Holzkirchen(DE)**
Erfinder: **Blechinger, Fritz**
**Heubergstrasse 26**
**D-8000 München 82(DE)**

(54) **Zweistrahl-Interferometer.**

(57) Die Erfindung bezieht sich auf ein Zweistrahl-Interferometer zur Fourierspektroskopie, insbesondere zur Emissionsmessung von Spurengas-Konzentrationen an Bord von Raumfahrzeugen, bei dem die optische Weglängendifferenz durch einen gleichförmigen rotierenden Exzenter (11,12), der über ein Gestänge (13,14) die lineare Auslenkung von Retroreflektoren (17,18) bewirkt, ermittelt wird. Ein terrestrischer Einsatz, etwa zur Emissionsmessung von Schornsteinen, wie auch ein Einsatz in Flugzeugen sind ebenfalls möglich. Ein Ausführungsbeispiel ist erläutert und in den Figuren der Zeichnung skizziert.

FIG. 1

Die beträgt.

## ZWEISTRAHL-INTERFEROMETER

Die Erfindung bezieht sich auf ein Zweistrahl-Interferometer zur Fourierspektroskopie, insbesondere zur Strahlmessung an Bord von Raumfahrzeugen, gemäß dem Gattungsbegriff des Anspruchs 1.

Durch die DE-PS 30 05 520 C2 ist ein solches Interferometer bekannt geworden, wobei zur Aufnahme von Emissions- und Absorptionsspektren, insbesondere von atmosphärischer Strahlung, die beiden Reflektorsysteme des Zweistrahl-Interferometers sowohl gegen räumliches Kippen als auch gegen Querversatz unempfindliche optische Systeme aufweist und jeweils einer der Retroreflektoren dieser Systeme an einem gemeinsamen starren Pendel befestigt ist. Der bei der Pendelbewegung der Retroreflektoren auftretende Systemfehler und eine Abweichung von der geradlinigen Bewegung wird bewußt in Kauf genommen. Abgesehen von der Störanfälligkeit, ist der Aufwand für die Auswuchtung (großes Volumen und große Massen) der einzelnen Interferometer-Bauelemente und die erforderlichen Lageregelungs- und Kontrollsysteme noch viel zu hoch.

Weiterhin sind Ausführungsformen bekanntgeworden, bei denen der bewegte Spiegel mit konstanter Geschwindigkeit kontinuierlich verschoben wird, wobei anstelle der hauptsächlich verwendeten Planspiegel nunmehr Retroreflektoren verwendet und bewegt werden. Ein Ausführungsbeispiel hierfür ist das Zweistrahl-Interferometer, das in der GB-PS 10 10 277 offenbart ist. Hier wird durch einen Strahlunterbrecher die Strahlung zur Erzeugung eines Wechselsignals zerhackt und als kollimiertes Strahlenbündel dem Strahlteiler zugeführt. Die optische Weglängendifferenz zur Erzeugung des Interferogrammes wird hier durch absatzweises Verdrehen des Dachkantprismas eines ersten Reflektorsystems schrittweise verändert. Der geringe optische Hub führt jedoch zu einer geringen spektralen Auflösung. Diese Ausführungsform ist jedoch nur für spektrometrische Analysen von Festkörpern und Flüssigkeiten verwendbar, nicht jedoch für hochauflösende Strahlenmessungen wie sie für Molekülbanden erforderlich sind.

Der vorliegenden Erfindung liegt die Aufgabe zugrunde, ein Zweistrahl-Interferometer der eingangs genannten Art zu schaffen, das die Nachteile des Standes der Technik beseitigt und in seinem Aufbau und seiner Funktion kompakt ist und eine konstante Vorschubgeschwindigkeit gewährleistet.

Diese Aufgabe wird durch die im Anspruch 1 aufgezeigten Maßnahmen gelöst. In den Unteransprüchen sind Ausgestaltungen und Weiterbildungen angegeben und in der nachfolgenden Beschreibung ist ein Ausführungsbeispiel erläutert sowie in den Figuren der Zeichnung dargestellt. Es zeigen:

Fig. 1 eine perspektivische Ansicht eines Ausführungsbeispiels mit Exzentermechanik,
Fig. 2 ein Schemabild der Ausführungsform gemäß Fig. 1 in der Exzenterstellung bei maximaler Weglängendifferenz,
Fig. 3 ein Schemabild der Ausführungsform gemäß Fig. 1 und 2 in der Exzenterstellung bei Weglängendifferenz = 0,

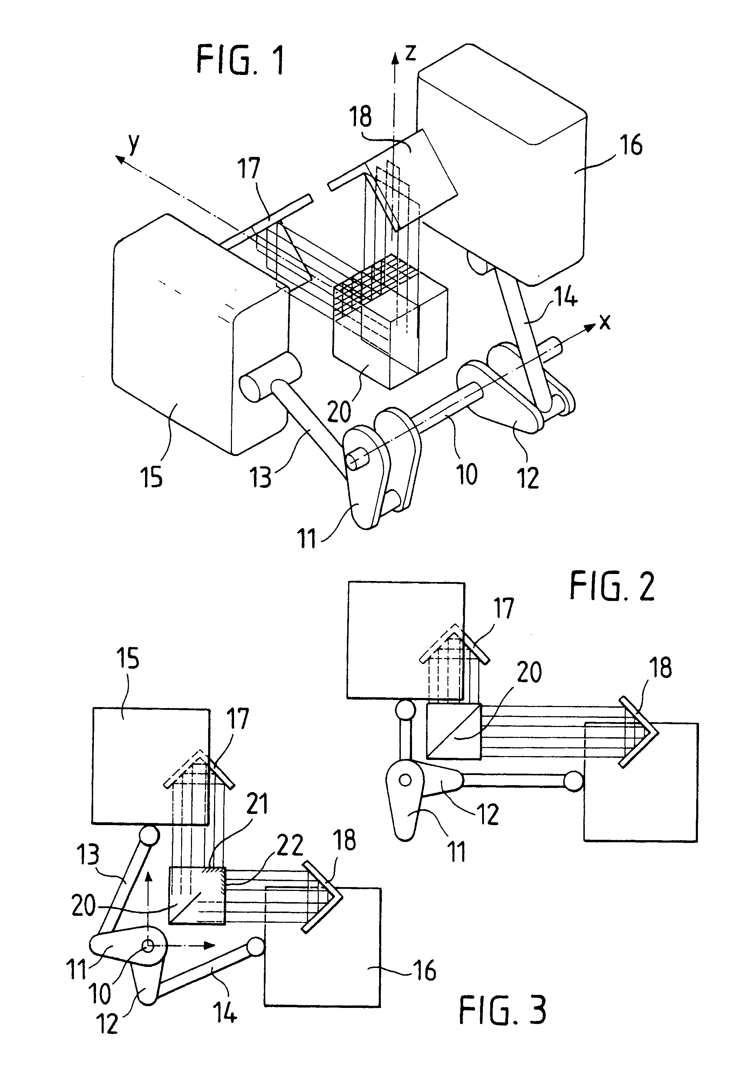

Das in Figur 1 dargestellte Ausführungsbeispiel eines Zweistrahl-Interferometers ist in seiner Mechanik analog einem invers betriebenen Auto-Motor aufgebaut. Hierbei wird eine in der X-Achse des Systems liegende Kurbelwelle 10 mit gleichbleibender, frei wählbarer Drehgeschwindigkeit bewegt. Mit dieser Kurbelwelle 10 sind in bestimmtem Abstand voneinander zwei Exzenter 11, 12 angeordnet und zwar so, daß sie zueinander um 90° versetzt sind. Der Exzenter 11 beispielsweise bewegt mit seiner "Pleuelstange" 13 einen an ihm gelenkig angeordneten Kolben 15 in Y-Richtung. Der Exzenter 12 dagegen bewegt mit seiner Pleuelstange 14 einen an diesen gelenkig angeordneten Kolben 16 in Z-Richtung. Die Kolben 15 und 16 tragen je einen starr mit ihnen verbundenen Retroreflektor 17 bzw. 18, die in Anordnung und Funktion mit einem zentral im Interferometer-System angeordneten Strahlteilerwürfel 20 korrespondieren.

Die Figuren 2 und 3 der Zeichnung zeigen die Exzenterstellung bei maximaler und Null-Weglängen-Differenz. In Figur 3 ist auch die Anordnung der beiden Spiegelflächen 21, 22 für den resultierenden Strahlengang der Weglängenänderung gezeigt, die direkt am Strahlteilerwürfel 20 in entsprechender Position aufgebracht sind. Diese Spiegelflächen bilden die sogenannten Umkehrspiegel des Systems. Durch diese Ausbildung wird Raum und Gewicht eingespart. Außerdem wird das Verhältnis von optischem zu mechanischem Hub auf 8: 1 verbessert.

Dieses vorgeschlagene mechanische Exzenterprinzip erlaubt, eine hohe spektrale Auflösung, die bei einem optischen Gesamthub von 20 cm beispielsweise 0.025 cm$^{-1}$ beträgt, wobei der Exzenterradius nur 1,25 cm entspricht.

Gegenüber dem Pendelsystem weist die vorgeschlagene Ausführungsform den weiteren Vorteil auf, daß durch das konstante Drehmoment, das die gleichmäßige Rotation des ausgewuchteten Exzenters auf das Raumfahrzeug ausübt, von einem Lageregelungssystem ganz erheblich leichter kompensiert werden kann, als die sich ständig wiederholenden Beschleunigungen der relativ großen Pendelmassen.

Das vorbeschriebene Zweistrahl-Interferometer

ist nicht nur optimal den sehr hohen Anforderungen an eine Spiegelführung angepaßt, sondern es gewährleistet auch eine hohe spektrale Auflösung ohne daß hierzu großflächige Spiegel erforderlich werden. Mit diesem Interferometer können nicht nur spektrometrische Analysen von Festkörpern und Flüssigkeiten durchgeführt werden, sondern auch Strahlenmessungen im Tieftemperaturbereich.

Die vorgeschlagene kompakte Bauweise erlaubt im Vergleich zum bekannten Doppelpendelsystem auch eine wesentliche einfachere Thermalkontrolle

## Ansprüche

1. Zweistrahl-Interferometer zur Fourierspektroskopie, insbesondere zur Strahlenmessung an Bord von Raumfahrzeugen, wobei im Meßstrahlengang ein Strahlteiler, zwei optische Reflektoreinrichtungen und ihnen zugeordneten rückreflektierenden Spiegeln sowie ein Meßstrahlen-Detektor angeordnet sind, **dadurch gekennzeichnet,** daß zur kontinuierlichen optischen Weglängenänderung in zueinander orthogonalen Richtungen eine motorgetriebene, gleichförmig drehende und reibungsarm gelagerte Kurbelwelle (10) über zwei an Exzenter (11, 12) angeordnete Pleuelstangen (13, 14) zwei je einen Retroreflektor (17 oder 18) tragende Kolben (15 oder 16) antreibt.

2. Interferometer nach Anspruch 1, **dadurch gekennzeichnet,** daß sich der resultierende Strahlengang für die Weglängenänderung über zwei direkt am Strahlteiler (20) aufgebrachte Spiegelflächen (21, 22) ergibt.

FIG. 1

FIG. 2

FIG. 3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE - C2 - 3 736 694 (ERWIN KAYSER-THREDE) * Spalte 5, Zeile 46 - Spalte 6, Zeile 13; Fig. 1 * -- | 1,2 | G 01 J 3/28 |
| A | GB - A - 2 162 334 (PHILIPS ELECTRONICS) * Seite 5, Zeilen 6-41; Fig. 7 * -- | 1,2 | |
| D,A | DE - C2 - 3 005 520 (KAYSER-THREDE GMBH) * Spalte 6, Zeile 46 - Spalte 7, Zeile 31; Fig. 1 * -- | 1,2 | |
| D,A | GB - A - 1 010 277 (GRUBB PARSONS) * Seite 2, Zeile 116 - Seite 3, Zeile 68; Fig. 1,3 * ---- | 1,2 | |

**RECHERCHIERTE SACHGEBIETE (Int. Cl.5)**

G 01 B 9/00
G 01 J 3/00
G 01 J 9/00
G 01 B 26/00

Der vorliegende Recherchenbericht wurde für alle Patentansprüche erstellt.

| Recherchenort | Abschlußdatum der Recherche | Prüfer |
|---|---|---|
| WIEN | 10-10-1990 | BAUER |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument